(19) Europäisches Patentamt
European Patent Office
Office européen des brevets

(11) EP 2 184 313 B1

(12) # EUROPÄISCHE PATENTSCHRIFT

(45) Veröffentlichungstag und Bekanntmachung des Hinweises auf die Patenterteilung:
**08.05.2013 Patentblatt 2013/19**

(51) Int Cl.:
***C08J 5/18*** *(2006.01)* ***C08K 5/1515*** *(2006.01)*
***C08K 5/00*** *(2006.01)* ***C08L 67/02*** *(2006.01)*

(21) Anmeldenummer: **09014445.2**

(22) Anmeldetag: **03.11.2009**

(54) **Biaxial gestreckte Polyesterfolie die einen Kettenverlängerer enthält, sowie Verfahren zu ihrer Herstellung und ihre Verwendung**

Biaxially stretched polyester film containing a chain extender and method for production of same and use of same

Feuille de polyester allongée bi-axiale contenant un prolongateur de chaîne, ainsi que son procédé de fabrication et d'utilisation

(84) Benannte Vertragsstaaten:
**DE FR GB IT LU**

(30) Priorität: **11.11.2008 DE 102008056694**

(43) Veröffentlichungstag der Anmeldung:
**12.05.2010 Patentblatt 2010/19**

(73) Patentinhaber: **Mitsubishi Polyester Film GmbH**
**65203 Wiesbaden (DE)**

(72) Erfinder:
- **Kuhmann, Bodo**
**65594 Runkel (DE)**
- **Kliesch, Holger**
**65462 Ginsheim (DE)**
- **Klein, Dagmar**
**55427 Ockenheim (DE)**
- **Jesberger, Martin**
**55122 Mainz (DE)**
- **Hackl, Thomas**
**65510 Hünstetten (DE)**

(74) Vertreter: **Schweitzer, Klaus et al**
**Plate Schweitzer Zounek**
**Patentanwälte**
**Rheingaustrasse 196**
**65203 Wiesbaden (DE)**

(56) Entgegenhaltungen:
**EP-A- 1 054 031**
**WO-A-03/008499**
**WO-A-2007/017494**
**US-A1- 2004 138 381**
**US-A1- 2004 214 984**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft eine biaxial gestreckte Folie aus einem Polyester, deren Dicke bevorzugt im Bereich von 6 bis 500 μm liegt. Die Folie enthält mindestens einen Kettenverlängerer und zeichnet sich durch ihre gute Herstellbarkeit, ein geringes Gel-Level, eine gute Hydrolysebeständigkeit und eine geringe Beeinträchtigung der anderen Folieneigenschaften durch den Kettenverlängerer aus. Die Erfindung betrifft ferner ein Verfahren zur Herstellung der Folie sowie ihre Verwendung.

Biaxial gestreckte Folien aus Polyestern im angegebenen Dickenbereich sind hinreichend bekannt.

Bei der Herstellung solcher Polyesterfolien fallen immer Produktionsrückstände (z. B. Randabschnitte) an, die prozessbedingt fast nie unter 10 Gew.-% des eingesetzten Materials liegen und typischerweise 30 bis 70 Gew.-% der eingesetzten Rohmaterialmenge entsprechen.

Üblicherweise werden diese Mengen regeneriert und wieder eingesetzt. Regeneriert heißt dabei, dass die Reste gehäckselt, in einem Extruder aufgeschmolzen und granuliert werden und dann in der Form dieses Granulates dem Prozess wieder zugeführt werden.

In jedem Extrusionsschritt (Folienherstellung und jede Regenerierung) verliert der Polyester üblicherweise an Kettenlänge, was sich in einer niedrigeren Viskosität des Regenerats niederschlägt. Der Verlust an Kettenlänge kommt durch die hydrolytische Spaltung der Ketten und Scherung in der Extrusion zustande.

Für die Produktion von biaxial gestreckten Polyesterfolien ist aber eine ausreichende Kettenlänge und damit Viskosität notwendig, da es anderenfalls, z. B. bei deren Unterschreitung, zu Folienabrissen und einer dadurch bedingten Verschlechterung der Wirtschaftlichkeit kommt.

Hinzu kommt, dass die Produktion umso störungsfreier verläuft, je stabiler die Viskosität der Schmelze über die Zeit ist. Daher ist es ungünstig, wenn Rohstoffe stark unterschiedlicher Viskosität gemischt werden, da es im Prozess so zu zufällig wechselnden Verhältnissen im Bereich der Extrusion kommen kann.

Beides beschränkt die maximal einsetzbare Regeneratmenge. Es wäre daher wünschenswert, wenn die Viskosität der Regenerate ungefähr auf dem Niveau der eingesetzten Originalrohstoffe läge.

Eine Erhöhung der Viskosität, insbesondere während der Extrusion, könnte durch den Einsatz von Kettenverlängerern erreicht werden.

Kettenverlängerer für Polyester sind ebenfalls bekannt und z. B. in EP-A-1 054 031 beschrieben. Diese Druckschrift beschreibt die Verwendung von Anhydriden, insbesondere Pyromellitsäureanhydrid, als wirksamen Bestandteil der erfindungsgemäßen Rezeptur.

Kettenverlängerer für Polyester, die auf Oxazolinen oder Caprolactamen beruhen, werden von DSM (Niederlande) unter dem Markennamen Allinco® vertrieben.

Kettenverlängerer mit Epoxidfunktionen werden u. a. in US-A-6,984,694 beschrieben und sind kommerziell unter dem Markennahmen Joncryl® von BASF (Deutschland) erhältlich.

Polymere mit Glycidylendgruppen, die sich ebenfalls prinzipiell als Kettenverlängerer für Polyester eignen, werden unter den Markennamen Epon® von Hexion (USA) oder Lotader® von Arkema (Frankreich) vertrieben, Solche auf Bisphenol A basierenden Epoxyharze sind beispielsweise beschrieben in US-A-2004/0214984.

Obwohl, wie oben beschrieben, gut bekannt, haben Kettenverlängerer in der industriellen Praxis bei der Herstellung von biaxial gestreckten Polyesterfolien bisher kleine nennenswerte Anwendung gefunden.

Die Ursache dafür liegt zum einen in der Tendenz der Kettenverlängerer, Gele zu bilden. Ein Gel ist dabei ein Polymer mit einem Vernetzungsgrad, der es mechanisch so stark vom Umgebungspolymer unterscheidet, dass es nicht mehr im vollen Maße am Streckprozess teilnehmen kann und sich so in der Folie ähnlich wie ein großes Partikel verhält. Diese sind in ungestreckten Polyesterfolien oder Spritzgussteilen eher unkritisch und wirken allenfalls beim Erreichen von extremen Größen unter Umständen optisch unschön und können deshalb zu Sortierungen führen. In gestreckten Polyesterfolien haben sie jedoch weit katastrophalere Auswirkungen, da solche Folien meist in Dicken unter 400 μm gefertigt werden und bereits kleine Gelteilchen nicht nur an der Oberfläche sichtbar werden, sondern im Streckprozess zu Abrissen führen können.

Weitere Nachteile können ein Anstieg der Gelbzahl, Ablagerungen auf Walzen im Produktionsprozess oder auch eine verringerte Hydrollysestabilität der verlängerten Polyesterketten sein, Letztgenannter Punkt führt dann dazu, dass der durch den Kettenverlängerer gewonnene Viskositätsanstieg in den nachfolgenden Extrusionen umso schneller wieder verloren geht.

Aufgabe der vorliegenden Erfindung ist es nun, eine Polyesterfolie zur Verfügung zu stellen, die die beschriebenen Nachteile des Standes der Technik vermeidet.

- Es soll ein stabiles und hohes Viskositätsniveau erreicht werden,
- ohne dass im nennenswerten Umfange Gele auftreten;
- die Folie soll sich dabei wirtschaftlich herstellen lassen;
- die Viskosität in der Extrusion soll möglichst wenig schwanken;

- gleichzeitig sollen die übriger (positiven) Eigenschaften der Folie durch die Maßnahmen zur Viskositätserhöhung wenig oder idealerweise gar nicht beeinträchtigt werden.

Diese Aufgaben werden gelöst durch eine biaxial orientierte Polyesterfolie, wie sie in Anspruch 1 definiert ist und welche neben Polyester einen speziellen Kettenverlängerer enthält.

Die Folie enthält als Hauptbestandteil einen Polyester. Geeignete Polyester sind beispielsweise Polyethylenterephthalat (PET), Polyethylennaphthalat (PEN), Polybutylenterephthalat (PBT), Polytrimethylenterephthalat, (PTT), bibenzolmodifiziertes Polyethylenterephthalat (PETBB), bibenzolmodifiziertes Polybutylenterephthalat (PBTBB), bibenzolmodifiziertes Polyethylennaphthalat (PENBB) oder Mischungen daraus, wobei PET, PBT, PEN und PTT sowie deren Mischungen und Co-Polyester bevorzugt sind.

Zur Herstellung der Polyester können neben den Hauptmonomeren wie Dimethylterephthalat (DMT), Ethylenglycol (EG), Propylenglycol (PG), 1,4-Butandiol, Terephthalsäure (TA), Benzoldicarbonsäure und/oder 2,6-Naphthalindicarbonsäure (NDA) auch Isophthalsäure (IPA), trans- und/oder cis-1,4-Cyclohexandimethanol (c-CHDM, t-CHDM oder c/t-CHDM), Neopentylglykol und andere geeignete Dicarbonsäurekomponenten (oder Dicarbonsäureester) und Diolkomponenten verwendet werden.

Bevorzugt sind Polymere, bei denen die Dicarbonsäurekomponente zu 90 Gew.-% (bezogen auf die Gesamtmenge der Dicarbonsäurekomponente) und mehr, insbesondere zu 95 Gew.-% und mehr aus TA besteht. Bevorzugt sind weiterhin Thermoplaste, bei denen die Diolkomponente zu 90 Gew.-% und mehr, insbesondere zu 93 Gew.-% (bezogen auf die Gesamtmenge der Diole) und mehr aus EG besteht. Bevorzugt sind auch Polymere, bei denen der Diethylenglykolanteil am Gesamtpolymer im Bereich von 0,25 bis 3 Gew.-% liegt. Bei allen in diesem Absatz genannten Mengenangaben bleibt der Kettenverlängerer unberücksichtigt.

Die Folie gemäß der Erfindung kann weiterhin anorganische oder organische Partikel, die zur Einstellung der Oberflächentopographie oder Optik (Glanz, Trübung usw.) benötigt werden, enthalten. Solche Partikel sind z. B. Kalziumcarbonat, Apatit, Siliziumdioxid, Titandioxid, Aluminiumoxid, vernetztes Polystyrol, vernetztes Polymethylmethacrylat (PMMA), Zeolithe und andere Silikate wie Aluminiumsilikate. Diese Verbindungen werden im Allgemeinen in Mengen von 0,05 bis 5 Gew.-%, vorzugsweise 0,1 bis 0,6 Gew.-%. (bezogen auf das Gewicht der Folie) eingesetzt. Besonders bevorzugt sind dabei Kalziumcarbonat und Siliziumdioxid.

Die eingesetzten Teilchengrößen $d_{50}$ liegen zum Erreichen einer guten Laufsicherheit in der Produktion im Allgemeinen zwischen 0,1 und 20 $\mu$m und bevorzugt zwischen 0,3 und 7 $\mu$m und besonders bevorzugt zwischen 0,5 und 5 $\mu$m. Faserförmige anorganische Zuschlagstoffe wie Glasfasern sind ungeeignet, da sie die Produktion der Polyesterfolie durch viele Abrisse unwirtschaftlich machen. Die angegebenen $d_{50}$-Werte beziehen sich immer auf die Partikelgröße der Teilchen vor der Einbringung in das Polymer.

In einer bevorzugten Ausführungsform ist die Folie weiß. Als Weißpigment eignen sich insbesondere Titandioxid, Bariumsulfat oder inkompatible Polymere wie Polypropylen, Polyethylen oder Cycloolefincopolymere (COCs) oder Kombinationen daraus. Diese werden dem Polyester zweckmäßigerweise zu 1 bis 35 Gew.-% zugegeben, wobei die bevorzugte Zugabemenge zwischen 2 und 20 Gew.-% (bezogen auf das Gesamtgewicht der Folie) liegt. Besonders bevorzugt enthält die Folie in dieser Ausführungsform zwischen 3 und 10 Gew.-% (bezogen auf das Gesamtgewicht der Folie) Weißpigment. Die eingesetzten Teilchengrößen $d_{50}$ liegen zum Erreichen einer guten Laufsicherheit und Weißgrad im Allgemeinen zwischen 0,05 und 5 $\mu$m und bevorzugt zwischen 0,1 und 1 $\mu$m (diese Größenangaben gelten jedoch nur für anorganische Weißpigmente).

Neben den oben erwähnten Additiven kann die Folie zusätzlich weitere Komponenten wie Flammschutzmittel (bevorzugt organische Phosphorsäureester) und/oder Antioxidantien und/oder UV-Stabilisatoren und/oder IR-absorbierende Stoffe enthalten. Eine Auswahl geeigneter Antioxidantien und UV-Stabilisatoren findet sich beispielsweise in FR-A-28 12 299.

Weiterhin hat es sich als günstig erwiesen, wenn der Folie ein Stabilisator in Form eines Radikalfängers hinzugegeben wird, da dadurch dem Verlust an aktiven Oxirangruppen in der Extrusion durch radikalische Nebenreaktionen entgegengewirkt wird. Zweckmäßigerweise enthält die erfindungsgemäße Folie solche Stabilisatoren als Radikalfänger bzw. Thermostabilisatoren in Mengen von 50 bis 15000 ppm, bevorzugt 100 bis 5000 ppm, besonders bevorzugt 300 bis 1000 ppm, bezogen auf das Gewicht der Folie. Die dem Polyesterrohstoff zugegebenen Stabilisatoren werden beliebig ausgewählt aus der Gruppe der primären Stabilisatoren wie sterisch gehinderte Phenole oder sekundäre aromatische Amine oder aus der Gruppe der sekundären Stabilisatoren wie Thioether, Phosphite und Phosphonite sowie Zink-dibutyl-dithiocarbamat oder synergistische Mischungen aus primären und sekundären Stabilisatoren. Bevorzugt sind die phenolischen Stabilisatoren. Zu den phenolischen Stabilisatoren zählen insbesondere sterisch gehinderte Phenole, Thio-bisphenole, Alkyliden-bisphenole, Alkyl-phenole, Hydroxybenzyl-Verbindungen, Acyl-amino-phenole und Hydroxyphenylpropionate (entsprechende Verbindungen sind beispielsweise beschrieben in "Kunststoffadditive", 2. Ausgabe, Gächter Müller, Carl Hanser-Verlag, und in "Plastics Additives Handbook", 5. Ausgabe, Dr. Hans Zweifel, Carl Hanser-Verlag). Besonders bevorzugt sind die Stabilisatoren mit folgenden CAS-Nummern: 6683-19-8, 36443-68-2, 35074-77-2, 65140-91-2, 23128-74-7, 41484-35-9, 2082-79-3 sowie Irganox® 1222 der Firma Ciba Specialities, Basel,

Schweiz, wobei in besonderen Ausführungsformen die Typen Irganox® 1010, Irganox® 1222, Irganox® 1330 und Irganox® 1425 oder Mischungen daraus bevorzugt sind.

Die Folie enthält erfindungsgemäß mindestens einen Kettenverlängerer. Kettenverlängerer sind Moleküle mit mindestens zwei reaktiven Gruppen, die während der Extrusion mit den Polyestern reagieren und Polyesterketten miteinander verknüpfen können und deren reaktive Gruppen bereits während der Extrusion weitgehend (d. h. zu >75 %) abreagieren und für eine Kettenreparatur (Verlängerung) während der Nutzung der Polyesterfolie nach ihrer Produktion nicht mehr zur Verfügung stehen.

Bevorzugte Kettenverlängerer im Sinne der Erfindung sind difunktionelle Epoxide und besonders bevorzugt polyfunktionelle Epoxide ("funktionell" beschreibt hier die Anzahl der Epoxidfunktionen). Die Epoxidfunktion ist dabei terminal am Ende der Molekülkette oder einer Seitenkette angeordnet (= epoxidische Kettenverlängerer).

Polyfunktionelle Epoxide sind dabei gegenüber den bifunktionellen bevorzugt, da geringere Einsatzmengen benötigt werden, höhermolekulare Endprodukte entstehen und es zu weniger gasförmigen Spaltprodukten kommt. Die Anzahl der Epoxidgruppen im Molekül ist dabei größer 1, bevorzugt größer 2 und besonders bevorzugt größer 5. Die Anzahl der Epoxidfunktionen pro Molekül ist üblicherweise <100, bevorzugt <20 und idealerweise <10. Je größer die Anzahl der Epoxidfunktionen, desto größer der Kettenverlängerungseffekt, aber umso größer auch die Tendenz zur Gelbildung.

Das Epoxiäquivalenzgewicht in g/mol (Molekulargewicht/Anzahl der Epoxidfunktionen) ist üblicherweise >200, bevorzugt >300 und idealerweise >425. Es ist üblicher weise <2000 und bevorzugt <1 000. Je höher das Epoxiäquivalenzgewicht ist, desto geringer wird die Tendenz zur Gelbildung. Mit steigendem Epoxiäquivalenzgewicht wird aber mehr in Gew.-% von der Verbindung benötigt, um einen effektiven Viskositätsanstieg zu erreichen.

Das Molekulargewicht der epoxidischen Kettenverlängerer ist üblicherweise >1500, bevorzugt >2000 und idealerweise >3000. Es ist üblicherweise <15000, bevorzugt <10000 und idealerweise <5000. Im angegebenen Molekulargewichtsbereich wird die beste Einbindung in die Polyestermatrix erreicht.

Die epoxidischen Kettenverlängerer sind dabei bevorzugt bei Raumtemperatur flüssig, da so die Einbringung in den Polyester erleichtert wird.

Molekulargewicht, Anzahl der Epoxidgruppen und Epoxiequivalenzgewicht können dabei unabhängig voneinander gewählt werden. Besonders geeignet sind Kettenverlängerer, bei denen alle drei Eigenschaften im idealen Bereich liegen.

Bisphenolhaltige Epoxide wie die der Araldite-Reihe oder die entsprechenden Epon-Produkte sind weniger bevorzugt, da diese Bisphenol A abspalten, welches in der Raumluft nachgewiesen werden konnte.

Kettenverlängerer im Sinne der Erfindung sind Polymere, die durch Formel 2 beschrieben werden.

Formel 2

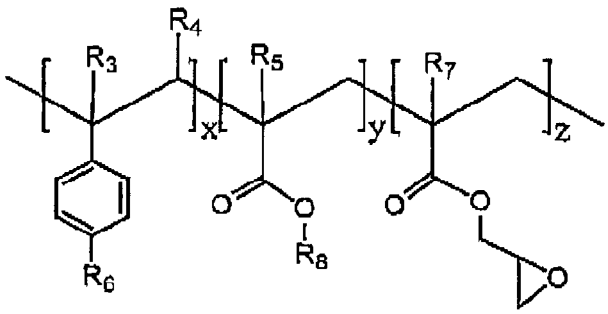

| | |
|---|---|
| $R_3$ - $R_7$ | sind dabei unabhängig voneinander H oder ein C1-C12-Alkylrest, bevorzugt $-CH_3$; |
| $R_8$ | ist eine C1-C12-Alkylgruppe, bevorzugt $CH_3$; |
| x und y | sind unabhängig voneinander und liegen zwischen 0 und 100 und bevorzugt zwischen 1 und 20; |
| x + y | ist größer als 0 und bevorzugt größer als 10, und |
| z | liegt zwischen 2 und 100, bevorzugt zwischen 3 und 20 und besonders bevorzugt zwischen 3 und 10. |

Diese Angaben beziehen sich auf das Mittel der eingesetzten Polymere, da einzelne Polymerketten in sich statistisch verteilte Monomeranteile aufweisen können, die von den bevorzugten Bereichen abweichen können.

Diese Verbindungen zeichnen sich durch eine besonders gute Einbindung in die Polyestermatrix aus und haben gleichzeitig eine sehr gute kettenverlängernde Wirkung bei geringer Gelbildungstendenz. Dies gilt insbesondere dann, wenn mindestens zwei der drei Monomere x, y und z gleichzeitig innerhalb der Vorzugsbereiche liegen.

Solche Polymere werden von BASF unter dem Markennamen Joncryl® ADR vertrieben. Besonders bevorzugt sind dabei die flüssigen Produkte.

Diese Polymere werden üblicherweise zu weniger als 2 Gew.-% dosiert und besonders bevorzugt zu weniger als 1,2 Gew.-%. Es wird dabei üblicherweise mindestens 0,05 Gew.-%, bevorzugt mindestens 0,1 und besonders bevorzugt mindestens 0,2 Gew.-% (bezogen auf das Gesamtgewicht der Folie) dosiert.

Grundsätzlich geeignete Epoxide sind dabei auch Co- bzw. Terpolymere aus Glycidylmethacrylat, Ethylen und/oder Estern der Acrylsäure. Solche Epoxide werden z. B. unter dem Markennamen Lotader® von Arkema (Frankreich) vertrieben. Hierbei sind insbesondere Lotader AX8840, AX8900 und AX8950 geeignet. Allerdings sind Polymere der Lotaderreihe, die keine Glycidylgruppen enthalten, ungeeignet. Insbesondere ungeeignet sind Polymere, die anstelle der Glycidylgruppen maleinsäureanhydridhaltige Monomere enthalten. Generell sind Polymere, die maleinsäureanhydridhaltige Monomere enthalten, weniger geeignet, da diese zu starker Gelbildung und geringer Kettenverlängerung neigen. Ein verarbeitungstechnischer Nachteil bei den ansonsten geeigneten Verbindungen der Lotader-Reihe ist, dass sie bei Raumtemperatur fest sind. Sie müssen erst aufschmelzen, um zu reagieren, und sind mit den Polyestern nicht gut mischbar. Dadurch werden relativ hohe Einsatzmengen von zweckmäßigerweise > 2 Gew.-% , bevorzugt > 4 Gew.-%, (bezogen auf das Gesamtgewicht der Folie) benötigt, um eine gute Viskositätsstabilisierung zu erreichen. Mit zunehmender Dosierung steigt aber das Risiko der Gelbildung und das Risiko sprunghafter Viskositätsanstiege mit dem Risiko von Produktionsunterbrechungen und in Extremfällen sogar der Beschädigung von Extrusionsbauteilen. Bei einer Dosierung > 10 Gew.-% kommt es zu starker Gelbildung.

Bei einer Dosierung der polymeren Kettenverlängerer wurde allgemein bei einer Dosierung oberhalb von 2 % eine deutliche Eintrübung der Folie beobachtet (Trübungsanstieg um mehr als 2, angegeben in %). Dies ist in der Regel nur in weißen oder matten Folien akzeptabel, in klaren Ausführungsformen jedoch nachteilig.

Überraschenderweise erwiesen sich alle anderen für Polyester im Allgemeinen vorgeschlagenen Kettenverlängerer in biaxial gestreckten Polyesterfolien als weitgehend ungeeignet.

Bisoxazoline (wie 1,3-PBO von DSM (Niederlande) unter dem Markennamen Allinco® vertrieben) führten zwar zu einer Viskostätserhöhung, es kam aber gleichzeitig zu einer deutlichen Gelbfärbung der Folie, und es kam zu einem Ausschwitzen des jeweiligen Oxazolins aus der Folie, was zu Belägen auf den Walzen in der Folienproduktion führte. Oberhalb von 2 Gew.-% war keine stabile Produktion mehr möglich. Bisoxazoline sind daher im Sinne der Erfindung als Kettenverlängerer ungeeignet.

Carbonylbiscaprolactam (CBC) wird ebenfalls unter dem Markennamen Allinco von DSM (Niederlande) als Kettenverlängerer vertrieben. CBC ist in Konzentrationen von 0,1 bis 1,3 Gew.-% (bezogen auf das Gesamtgewicht der Folie) wirksam. Darunter ist der Effekt zu gering, und darüber kommt es zu Gelen und sprunghaftem Viskositätsanstieg in der Extrusion. Entgegen den Erwartungen kam es aber auch mit CBC zu Ausschwitzungen mit Belägen auf Walzen und zu einer Gelbfärbung der Folie. CBC und andere Carbonyllactame sind daher im Sinne der Erfindung als Kettenverlängerer ungeeignet.

Polyfunktionelle Anhydride (Polyanhydrid bzw. polyfunktionell bedeutet hier: mehrere Anhydridfunktionen) sind als Kettenverlänger sowohl als Einzelkomponente als auch in Kombination mit polyfunktionellen Alkoholen beschrieben. Spezielle Polyanhydride und Polyalkohole sind in EP-A-1 054 031 beschrieben. Bevorzugt werden dort Tetracarbonsäuredianhydride eingesetzt. Besonders bevorzugt ist dabei Pyromellitsäuredianhydrid, insbesondere auch in Kombination mit polyfunktionellen Alkoholen wie Glykol und Pentaerythrit und Phosphonaten.

Sowohl mit polyfunktionellen Anhydriden allein als auch in den Kombinationen mit Alkoholen ließ sich ein Kettenverlängerungseffekt feststellen. Überraschenderweise traten aber bereits in den in EP-A-1 054 031 beschriebenen Konzentrationen erste sichtbare Gele auf. Besonders überraschend war darüber hinaus die hohe Hydrolysegeschwindigkeit der resultierenden Folien, die etwa 15 % schneller hydrolysierten als vergleichbare Folien ohne Kettenverlängerer und entsprechend auch etwa 15 % schneller als Folien, die die oben beschriebenen bevorzugten Kettenverlängerer enthielten (in der gleichen effektiven Wirkkonzentration).

Daher sind Polyanhydride sowohl alleine als auch in Kombination mit Polyolen und Phosphonaten keine geeigneten Kettenverlängerer im Sinne der Erfindung.

Die Kettenverlängerer werden bevorzugt direkt bei der Folienherstellung in den Extruder dosiert. Besonders bevorzugt ist dabei, wenn die Viskosität der Schmelze im Prozess (on-line) gemessen wird und die Dosierung des Kettenverlängerers so geregelt wird, dass eine konstante Viskosität in der Extrusion erreicht wird.

Der Kettenverlängerer kann aber auch bei der Rohstoffherstellung zugegeben werden. Eine bevorzugte Stelle ist hier die Zugabe in die Extrusion bei der Herstellung des Regranulats aus den Produktionsrückständen der Folienproduktion. Der SV-Wert der Regenerate wird dabei über die Dosierung der Kettenverlängerer zweckmäßigerweise so eingestellt, dass er dem mittleren SV-Wert der sonstigen Rohstoffe bei der erneuten Folienherstellung entspricht.

Bevorzugt werden Mehrschneckenextruder (mit mindestens 2 Schnecken) eingesetzt.

Der Kettenverlängerer kann auch über die Masterbatchtechnologie eingebracht werden. D. h. der/die Kettenverlängerer (zusammen oder separat) wird/werden in einem Extruder (bevorzugt einem Mehrschneckenextruder) in das Polymer eingebracht. Diese/s Polymer/e wird/werden dann bei der Folienherstellung pur oder mit anderen Polymeren gemischt und erneut extrudiert. Dieses Verfahren ist jedoch weniger bevorzugt, da bereits im ersten Extrusionsschritt Kettenverlängerer verbraucht (abreagiert) wird, welcher dann in der Folie nicht mehr als aktive Substanz zur Verfügung

steht. Es sollten dementsprechend besonders schonende Extrusionsbedingungen gewählt werden, die anders als bei der Folienherstellung nicht zu einem vollständigen (d. h. > 75 %) Abreagieren der aktiven Gruppen führen. Dies kann z. B. durch die Wahl von Copolyestern mit niedrigerem Schmelzpunkt (z. B. Polymere mit mehr als 5 Gew.-%, bevorzugt mehr als 10 Gew.-% IPA (Isophthalsäure)) und/oder durch eine späte Zugabe des Kettenverlängerers im Extruder, d. h. nicht direkt im Einzugsbereich, erreicht werden.

Die Folie gemäß der Erfindung wird im Allgemeinen nach an sich bekannten Extrusionsverfahren hergestellt und ist ein- oder mehrschichtig, wobei der Kettenverlängerer in allen Schichten enthalten sein kann, jedoch auch Ausführungen möglich sind, in denen nicht alle Schichten mit dem Kettenverlängerer ausgerüstet sind.

Die Foliendicke liegt zwischen 6 und 500 µm und bevorzugt zwischen 12 und 300 µm und besonders bevorzugt zwischen 36 und 200 µm.

Bei dem Verfahren zur Herstellung der erfindungsgemäßen Folien wird zweckmäßigerweise so vorgegangen, dass die entsprechenden Schmelzen durch eine Flachdüse extrudiert werden, die so erhaltene Folie zur Verfestigung auf einer oder mehreren Walze/n (Kühlwalze) als weitgehend amorphe Vorfolie abgezogen und abgeschreckt wird, die Folie anschließend erneut erhitzt und biaxial gestreckt (orientiert) und die biaxial gestreckte Folie thermofixiert wird. Im Bereich der Extrusion hat es sich dabei als günstig erwiesen, wenn die Extrudereinzugszone nicht über 260 °C heiß wird, da es sonst bereits hier zu ersten unerwünschten Reaktionen der Kettenverlängerer kommt.

Die biaxiale Verstreckung wird im Allgemeinen sequentiell durchgeführt. Dabei wird vorzugsweise erst in Längsrichtung (d. h. in Maschinenrichtung = MD-Richtung) und anschließend in Querrichtung (d. h. senkrecht zur Maschinenrichtung = TD-Richtung) verstreckt. Dies führt zu einer Orientierung der Molekülketten. Das Verstrecken in Längsrichtung lässt sich mit Hilfe zweier entsprechend dem angestrebten Streckverhältnis verschieden schnell laufender Walzen durchführen. Zum Querverstrecken benutzt man allgemein einen entsprechenden Kluppenrahmen.

Die Temperatur, bei der die Verstreckung durchgeführt wird, kann in einem relativ großen Bereich variieren und richtet sich nach den gewünschten Eigenschaften der Folie. Im Allgemeinen wird die Längs- und auch die Querstreckung bei $T_g$ + 10 °C bis $T_g$ + 60 °C (Tg = Glastemperatur der Folie) durchgeführt. Das Längsstreckverhältnis liegt allgemein im Bereich von 2,0 : 1 bis 6,0 : 1, vorzugsweise 3,0 : 1 bis 4,5 : 1. Das Querstreckverhältnis liegt allgemein im Bereich von 2,0 : 1 bis 5,0 : 1, vorzugsweise 3,0 : 1 bis 4,5 : 1 und das einer gegebenenfalls durchgeführten zweiten Längs- und Querstreckung liegt bei 1,1 : 1 bis 5,0 : 1.

Die Längsstreckung kann gegebenenfalls gleichzeitig mit der Querstreckung (Simultanstreckung) durchgeführt werden. Als besonders günstig hat es sich dabei erwiesen, wenn das Streckverhältnis in Längs- und Querrichtung jeweils größer als 3,0 ist.

Bei der nachfolgenden Thermofixierung wird die Folie etwa 0,1 bis 10 s lang bei einer Temperatur von 150 bis 260 °C, vorzugsweise 200 bis 245 °C, gehalten. Anschließend an bzw. beginnend in der Thermofixierung wird die Folie um 0 bis 15 %, vorzugsweise um 1,5 bis 8 %, in Quer- und gegebenenfalls auch in Längsrichtung relaxiert und die Folie dann in üblicher Weise abgekühlt und aufgewickelt.

Folien, die die erfindungsgemäßen Kettenverlängerer enthalten, eignen sich für nahezu alle typischen Anwendungen von biaxial gestreckten Polyesterfolien, von Elektroisolierfolien bis hin zu Verpackungen. Es kann ein deutlich höherer Anteil an Regenerat zugegeben werden, ohne dass die Prozessstabilität darunter leidet. Bei einer Zugabe des Kettenverlängerers direkt bei der Folienextrusion kann die Prozessstabilität weiter verbessert werden. Beides führt zu erheblichen Kosteneinsparungen.

In den nachfolgenden Ausführungsbeispielen erfolgt die Messung der einzelnen Eigenschaften gemäß den angeführten Normen bzw. Verfahren.

### Messmethoden

### Standardviskosität (SV)

Die Standardviskosität SV wird - angelehnt an DIN 53726 - durch die Messung der relativen Viskosität $\eta_{rel.}$ einer 1 Gew.-%igen Lösung in Dichloressigsäure (DCE) in einem Ubbelohde Viskosimeter bei 25 °C gemessen. Der SV-Wert ist wie folgt definiert:

$$SV = (\eta_{rel.} - 1) \bullet 1000$$

### Schrumpf

Der thermische Schrumpf wird an quadratischen Folienmustern mit einer Kantenlänge von 10 cm bestimmt. Die Proben werden so ausgeschnitten, dass eine Kante parallel zur Maschinenrichtung und eine Kante senkrecht zur

Maschinenrichtung verläuft. Die Proben werden genau ausgemessen (die Kantenlänge $L_0$ wird für jede Maschinenrichtung TD und MD bestimmt, $L_{0\,TD}$ und $L_{0\,MD}$) und werden 15 min bei der angegeben Schrumpfungstemperatur (hier 200 °C) in einem Umlufttrockenschrank getempert. Die Proben werden entnommen und bei Raumtemperatur genau ausgemessen (Kantenlänge $L_{TD}$ und $L_{MD}$). Der Schrumpf ergibt sich aus der Gleichung

$$\text{Schrumpf [\%] MD} = 100 \bullet (L_{0\,MD} - L_{MD}) / L_{0\,MD}$$

$$\text{Schrumpf [\%] TD} = 100 \bullet (L_{0\,TD} - L_{TD}) / L_{0\,TD}$$

**Messung der Transparenz**

Die Messung erfolgt an einem Haze-gard Plus der Fa. BYK Gardner Instruments nach ASTM D 1003.

**Messung der Transparenz bei 370 nm**

Die Messung der Transparenz erfolgt mit einem Lambda 3 UV/Vis Spektrometer der Firma Perkin Elmer.

**Messung der Dichte**

Die Dichte kann in einer Gradientensäule (z. B. Tetrachlorkohlenstoff und Hexan) oder mittels eines Gaspyknometers (Helium oder Stickstoff) bestimmt werden.

**Messung des mittleren Partikeldurchmessers $d_{50}$ an Partikeln vor der Einbringung in den Rohstoff**

Die Bestimmung des mittleren Partikeldurchmessers $d_{50}$ wird mittels Laser auf einem Master Sizer (Malvern Instruments, GB) nach der Standardmethode durchgeführt (andere Messgeräte sind z. B. Horiba LA 500 (Horiba Ltd., JP) oder Helos (Sympatec GmbH, DE), welche das gleiche Messprinzip verwenden). Die Proben werden dazu in eine Küvette mit Wasser gegeben und diese dann in das Messgerät gestellt. Der Messvorgang ist automatisch und beinhaltet auch die mathematische Bestimmung des $d_{50}$-Wertes. Der $d_{50}$-Wert wird dabei definitionsgemäß aus der (relativen) Summenkurve der Partikelgrößenverteilung bestimmt: Der Schnittpunkt des 50 %-Ordinatenwertes mit der Summenkurve liefert auf der Abszissenachse den gewünschten $d_{50}$-Wert.

**Messung der mechanischen Eigenschaften der Folie**

Die Bestimmung der mechanischen Eigenschaften erfolgt nach DIN EN ISO 527-1 bis 3.

**Autoklavierung**

Die Folien (10 • 2 cm) werden an einem Draht in den Autoklaven (Adolf Wolf SANOklav Typ: ST-MCS-204) gehängt und der Autoklav mit 2 l Wasser befüllt. Nach dem Schließen des Autoklaven wird dieser erhitzt. Bei 100 °C wird die Luft durch den Wasserdampf über das Ablassventil verdrängt. Dies wird nach ca. 5 min geschlossen, worauf die Temperatur auf 110 °C und der Druck auf 1,2 - 1,5 bar ansteigt. Nach der eingestellten Zeit wird der Autoklav automatisch abgeschaltet und nach Öffnen des Ablassventils die Folien entnommen. An diesen wird dann der SV-Wert bestimmt.

**Beispiele**

<u>Kettenverlängerer 1</u>

Joncryl 4380 (bei Raumtemperatur flüssig) mit einem Molekulargewicht von 3300 und einem Epoxyequivalenzgewicht von 450 g/mol. Joncryl 4380 entspricht Formel 2 mit den Variablen in den dort angegebenen Größenordnungen.

Kettenverlängerer 2

1,3-PBO (1,3-Phenylenbisoxazolin Allinco von DSM, NL)

Weitere verwendete Rohstoffe

| | |
|---|---|
| Rohstoff R1 | PET (Invista, DE), SV-Wert 790, Carboxylendgruppengehalt 22 mmol/kg, Diethylenglykolgehalt 0,75 Gew.-% |
| Masterbatch MB1 | 20 Gew.-% $TiO_2$ (Hombitan LW-SU von Sachtleben, DE) und 80 Gew.-% PET, SV-Wert 790, Diethylenglykolgehalt 1 Gew.-%, Carboxylendgruppengehalt 42 mmol/kg (Zugabe $TiO_2$ durch Einarbeitung in PET in einem Zweischneckenextruder) |

Folienherstellung:

Thermoplast-Chips (MB1 sowie R1) wurden gemäß den in den Beispielen angegebenen Verhältnissen gemischt und bei 278 °C in einem Zweischneckenextruder (JapanSteelWorks) extrudiert. Die Dosierung der Kettenverlängerer erfolgte direkt in den Extrudereinzug mittels einer Schlauchpumpe (Kettenverlängerer 1) bzw. mittels einer Rüttelrinne (Kettenverlängerer 2). Die Viskosität des Polymers wird in der Schmelze gemessen und die Dosierung der Kettenverlängerer um +/- 15 % der Viskosität angepasst. Das geschmolzene Polymer wurde aus einer Düse über eine Abzugswalze abgezogen. Die Folie wurde um den Faktor 3,4 in Maschinenrichtung bei 116 °C gestreckt und in einem Rahmen bei 110 °C eine Querstreckung um den Faktor 3,3 durchgeführt. Anschließend wurde die Folie bei 225 °C thermofixiert und in Querrichtung um 6 % bei Temperaturen von 200 bis 180 °C relaxiert. Die Endfoliendicke betrug 50 μm.

Die Beispielrezepturen und die Eigenschaften der hergestellten Folien sind der nachstehenden Tabelle zu entnehmen.

Die Folie aus Vergleichsbeispiel 1 zeigte im Gegensatz zu Beispiel 1 eine mit dem Auge leicht erkennbare Gelbfärbung, und auf mehreren Walzen (Abzugswalze und Streckwalzen) bildeten sich Ablagerungen, die als 1,3-PBO und Abbauprodukte identifiziert werden konnten.

Während die oben beschriebene automatische Dosierungskorrektur mit +/- 15 % bei Beispiel 1 ausreichte, um eine sehr gleichmäßige Viskosität in der Schmelze einzustellen, ergaben sich im Vergleichsbeispiel 1 mehrere erhebliche Ausschläge zu höheren Viskositäten, die im Prozess zu Abrissen führten. Die Hydrolysegeschwindigkeit aus Beispiel 1 entsprach der Hydrolysegeschwindigkeit (Verlust an SV-Einheiten pro Stunde im Autoklav) einer Folie aus den gleichen Rohstoffen ohne Kettenverlängerer (Vergleichsbeispiel 2). Die Hydrolysegeschwindigkeit der Folie aus Vergleichsbeispiel 1 lag um 10 % darüber.

**Tabelle**

| | | Beispiel 1 | Vergleichsbeispiel 1 | Vergleichsbeispiel 2 |
|---|---|---|---|---|
| R1 | Gew.-% | 19,5 | 19,2 | 20 |
| MB1 | Gew.-% | 10 | 10 | 10 |
| Eigenregenerat (die Folie wird dabei gehäckselt, das Häcksel einem Zweischneckenextruder zugeführt ,aufgeschmolzen, durch eine Lochdüse extrudiert und wieder granuliert) | Gew.-% | 70 | 70 | 70 |
| Kettenverlängerer 1 | Gew.% | 0,5 | 0 | 0 |
| Kettenverlängerer 2 | Gew.-% | 0 | 0,8 | 0 |
| Foliendicke | μm | 50 | 50 | 50 |
| SV-Wert (nach Folienherstellung) | | 791 | 790 | 685 |

**Patentansprüche**

1. Biaxial orientierte Polyesterfolie, welche neben Polyester einen Kettenverlängerer enthält, wobei der Kettenverlängerer ein Polymer der Formel 2 ist:

Formel 2

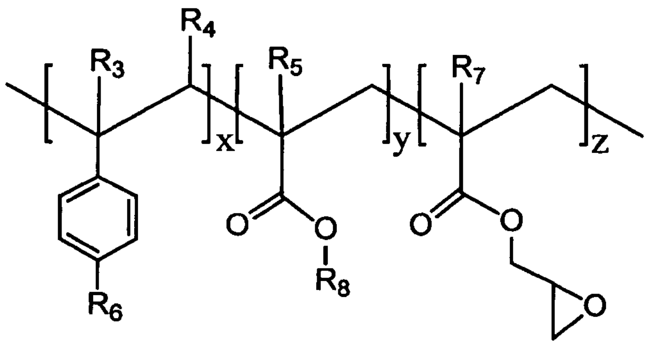

wobei

$R_3$ bis $R_7$ unabhängig voneinander H oder einen C1-C12-Alkylrest bedeuten,
$R_8$ eine C1-C12-Alkylgruppe ist,
x und y unabhängig voneinander sind und eine Zahl zwischen 0 und 100 bedeuten,
x + y größer als 0 ist und
z eine Zahl zwischen 2 und 100 bedeutet.

2. Polyesterfolie nach Anspruch 1, wobei die Folie weiß ist.

3. Polyesterfolie nach Anspruch 1 oder 2, wobei die Folie ein oder mehrere Additive enthält, die ausgewählt werden aus der Gruppe, bestehend aus: anorganischen Partikeln, organischen Partikeln, Flammschutzmittel, Radikalfänger, Antioxidantien, IR-absorbierende Stoffe und UV-Stabilisatoren.

4. Polyesterfolie nach einem der vorhergehenden Ansprüche, **dadurch gekennzeichnet, dass** die Anzahl der Epoxidgruppen im Kettenverlängerermolekül >1 und <100 ist.

5. Polyesterfolie nach einem der vorhergehenden Ansprüche, **dadurch gekennzeichnet, dass** das Epoxiäquivalenzgewicht des Kettenverlängerers in g/mol (Molekulargewicht/Anzahl der Epoxidfunktionen) >200 und <2000 ist.

6. Polyesterfolie nach einem der vorhergehenden Ansprüche, **dadurch gekennzeichnet, dass** Molekulargewicht des Kettenverlängerers >1500 und < 15000 ist.

7. Polyesterfolie nach einem der vorhergehenden Ansprüche, **dadurch gekennzeichnet, dass** der Kettenverlängerer bei Raumtemperatur (25 °C) flüssig ist.

8. Polyesterfolie nach einem der vorhergehenden Ansprüche, wobei der Kettenverlängerer zu weniger als 2 Gew.-% und zu mindestens 0,05 Gew.-% (bezogen auf das Gesamtgewicht der Folie) in der Folie enthalten ist.

9. Verfahren zur Herstellung einer Polyesterfolie gemäß Anspruch 1, wobei die der Zusammensetzung der Folie entsprechenden Schmelzen durch eine Flachdüse extrudiert werden, die so erhaltene Folie zur Verfestigung auf einer oder mehreren Walze/n (Kühlwalze) als weitgehend amorphe Vorfolie abgezogen und abgeschreckt wird, die Folie anschließend erneut erhitzt und biaxial gestreckt (orientiert) und die biaxial gestreckte Folie thermofixiert und aufgerollt wird, **dadurch gekennzeichnet, dass** sie einen Kettenverlängerer der Formel 2 enthält.

10. Verwendung einer Polyesterfolie nach Anspruch 1 in Außenanwendungen, als Flachbandkabel, als Rückseitenlaminat von Solarmodulen und in Elektroisolieranwendungen.

## Claims

1. A biaxially oriented polyester film which comprises a chain extender in addition to polyester, wherein the chain extender is a polymer of the formula 2:

Formula 2

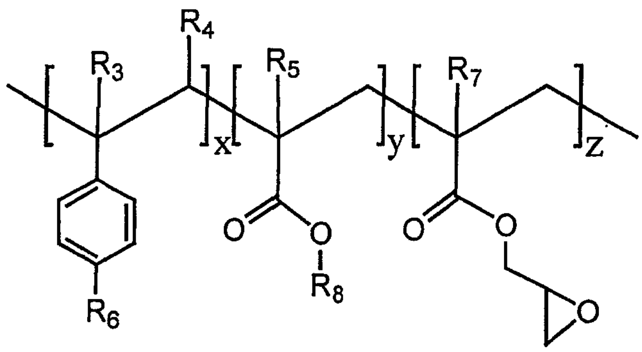

where

$R_3$ to $R_7$ are each independently H or a C1-C12-alkyl radical,
$R_8$ is a C1-C12-alkyl group,
x and y are independent of one another and are each a number from 0 to 100,
x + y is greater than 0 and
z is from 2 to 100.

2. The polyester film as claimed in claim 1, which is white.

3. The polyester film as claimed in claim 1 or 2, which comprises one or more additives selected from the group consisting of: inorganic particles, organic particles, flame retardants, free-radical scavengers, antioxidants, IR absorbents and UV stabilizers.

4. The polyester film as claimed in any of the preceding claims, wherein the number of epoxy groups in the chain extender molecule is > 1 and < 100.

5. The polyester film as claimed in any of the preceding claims, wherein the epoxy equivalent weight of the chain extender in g/mol (molecular weight/number of epoxy functions) is > 200 and < 2000.

6. The polyester film as claimed any of the preceding claims, wherein the molecular weight of the chain extender is > 1500 and < 15 000.

7. The polyester film as claimed in any of the preceding claims, wherein the chain extender is liquid at room temperature (25 °C).

8. The polyester film as claimed in any of the preceding claims, wherein the chain extender is present in the film in an amount of less than 2 % by weight and in an amount of at least 0.05 % by weight (based on the total weight of the film).

9. A process for producing a polyester film as claimed in claim 1 by extruding the composition of the melts corresponding to the film through a flat die, consolidating the film thus obtained by drawing it off and quenching it on one or more roll(s) (chill rolls) as a substantially amorphous preliminary film, then reheating the film and biaxially stretching (orienting) it and heatsetting and rolling up the biaxially stretched film, wherein the film comprises a chain extender of the formula 2.

10. The use of a polyester film as claimed in claim 1 in outdoor applications, as a ribbon cable, as a backside laminate

of solar modules and in electrical insulation applications.

**Revendications**

1. Feuille de polyester à orientation biaxiale, laquelle contient outre du polyester un prolongateur de chaîne, le prolongateur de chaîne étant un polymère de la formule 2 :

Formule 2

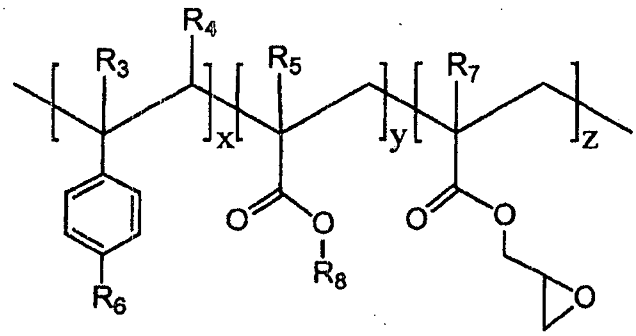

dans laquelle

$R_3$ à $R_7$ représentent indépendamment les uns des autres H ou un reste alkyle en $C_1$ - $C_{12}$,
$R_8$ est un groupe alkyle en $C_1$ - $C_{12}$,
x et y sont indépendants l'un de l'autre et représentent un nombre entre 0 et 100,
x + y est supérieur à 0 et
z représente un nombre entre 2 et 100.

2. Feuille de polyester selon la revendication 1, la feuille étant blanche.

3. Feuille de polyester selon la revendication 1 ou 2, la feuille contenant un ou plusieurs additifs qui sont sélectionnés dans le groupe constitué de : particules inorganiques, particules organiques, agents ignifuges, capteurs de radicaux, antioxydants, absorbeurs IR et stabilisants UV.

4. Feuille de polyester selon l'une quelconque des revendications précédentes, **caractérisée en ce que** le nombre des groupes époxyde dans la molécule prolongateur de chaîne est >1 et <100.

5. Feuille de polyester selon l'une quelconque des revendications précédentes, **caractérisée en ce que** le poids équivalent époxyde du prolongateur de chaîne en g/mole (poids moléculaire/nombre des fonctions époxyde) est >200 et <2000.

6. Feuille de polyester selon l'une quelconque des revendications précédentes, **caractérisée en ce que** le poids moléculaire du prolongateur de chaîne est >1500 et <15000.

7. Feuille de polyester selon l'une quelconque des revendications précédentes, **caractérisée en ce que** le prolongateur de chaîne est fluide à température ambiante (25° C).

8. Feuille de polyester selon l'une quelconque des revendications précédentes, le prolongateur de chaîne étant contenu dans la feuille à raison de moins de 2 % en poids et à raison d'au moins 0,05 % en poids (par rapport au poids total de la feuille).

9. Procédé de fabrication d'une feuille de polyester selon la revendication 1, selon lequel les masses fondues correspondant à la composition de la feuille sont extrudées à travers une filière plate, la feuille ainsi obtenue est tirée et trempée à des fins de consolidation sur un ou plusieurs rouleau/x (rouleau de refroidissement) comme préfeuille largement amorphe, la feuille est ensuite de nouveau chauffée et étirée (orientée) biaxialement et la feuille étirée

biaxialement est thermofixée et enroulée, **caractérisée en ce qu'**elle contient un prolongateur de chaîne de la formule 2.

**10.** Utilisation d'une feuille de polyester selon la revendication 1 dans des applications extérieures, comme câble plat, comme stratifié arrière de modules solaires et dans des applications d'isolement électrique.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1054031 A
- US 6984694 A
- US 20040214984 A
- FR 2812299 A